# EUROPÄISCHE PATENTSCHRIFT

(11) **EP 1 859 809 B1**
(45) Veröffentlichungstag und Bekanntmachung des Hinweises auf die Patenterteilung: **13.06.2012**
(21) Anmeldenummer: 07010222.3
(22) Anmeldetag: 23.05.2007
(51) Int. Cl.: A61K 47/36

(54) **Zusammensetzung zur Trockenkonservierung von Mikroorganismen**
Composition for dry conservation of microorganisms
Composition destinée à la conservation à sec de microorganismes

(30) Priorität: 23.05.2006 AT 8922006
(43) Veröffentlichungstag der Anmeldung: 28.11.2007
(73) Patentinhaber: Gilhofer, Andree, 4170 Haslach (AT)
(72) Erfinder: Gilhofer, Andree, 4170 Haslach (AT)
(74) Vertreter: Rüger, Rudolf

(56) Entgegenhaltungen:
- EP-A- 1 213 347
- EP-A- 1 344 458
- WO-A-2005/084646
- US-A- 5 283 059
- GODWARD G ET AL: "VIABILITY AND SURVIVAL OF FREE, ENCAPSULATED AND CO-ENCAPSULATED PROBIOTIC BACTERIA IN YOGHURT LEBENSFAEHIGKEIT UND UEBERLEBEN FREIER, VERKAPSELTER UND KO-VERKAPSELTER PROBIOTISCHER BAKTERIEN IN JOGHURT" MILCHWISSENSCHAFT. MILK SCIENCE INTERNATIONAL, AVA AGRAR-VERLAG ALLGAU GMBH., KEMPTEN, DE, Bd. 58, Nr. 7/8, 2003, Seiten 396-399, XP001185327 ISSN: 0026-3788
- DESMOND C ET AL: "IMPROVED SURVIVAL OF LACTOBACILLUS PARACASEI NFBC 338 IN SPRAY-DRIED POWDERS CONTAINING GUM ACACIA" JOURNAL OF APPLIED MICROBIOLOGY, OXFORD, GB, Bd. 93, Nr. 6, 2002, Seiten 1003-1011, XP009085037 ISSN: 1364-5072
- LIMA I ET AL: "The functional effectiveness of reprocessed rice bran as an ingredient in bakery products." NAHRUNG 46 (2) 112-117 2002 ARS, USDA, S. REG. RES. CENT., PO BOX 19687, NEW ORLEANS, LA 70179, USA. FAX +504-286-4419. E-MAIL IMLIMA(A)SRRC.ARS.USDA.GOV, Bd. 46, 2002, Seiten 112-117, XP002451090

## Beschreibung

Die Erfindung betrifft eine Zusammensetzung zum Trockenkonservieren zumindest von probiotisch und/oder ernährungsphysiologisch wirksamen Mikroorganismen und Pflanzenbestandteilen sowie ein Verfahren zu dessen Herstellung und deren Verwendungen.

Gefriertrocknung und Sprühtrocknung sind die zwei häufigsten für die industrielle Herstellung von ernährungsphysiologisch und von probiotisch wirksamen Mikroorganismenpräparaten angewandten Trocknungsverfahren, wie von Kim H.S., Kamara B.J., Good I.C. und Enders Jr. G.L. 1988 im Journal of Industrial Microbiology and Biotechnology, Band 3(4), Seiten 253-257, und von Carvalho A.S. und anderen 2003 in der Fachzeitschrift Lait, Band 83, Seiten 203-210 beschrieben wurde.

Die Gefriertrocknung, auch Kälte-, Vakuum- oder Sublimationstrocknung genannt, ist die Trocknung von Objekten im gefrorenen Zustand, beispielsweise von Gemüse, Obst oder auch Mikroorganismen. Das so getrocknete Material wird auch als Lyophilisat bezeichnet. Die tiefgefrorenen organischen Materialien werden einem Unterdruck von weniger als 6 mbar ausgesetzt. Unter dem Einfluss des reduzierten Gasdrucks geht das Wasser während des gesamten Trocknungsvorganges direkt von Eis in Dampf über und kann so aus dem Material entfernt werden.

Im Gegensatz dazu ist die Sprühtrocknung ein kontinuierliches Verfahren und wird zur Trocknung von Lösungen, Suspensionen oder pastösen Massen eingesetzt. Mittels einer Düse wird das zu trocknende Gut durch mechanischen Pumpendruck oder durch komprimierte Luft oder inertes Gas in einen Heissluftstrom mit schnell rotierenden Zerstäuberscheiben bei Temperaturen bis zu 220 deg. eingebracht, der es in Bruchteilen einer Sekunde zu einem feinen Pulver trocknet. Die Sprüheinrichtung befindet sich am oberen Teil eines Sprühturms, das anfallende Trockengut wird meist durch einen Zyklonabscheider vom Luftstrom getrennt und kann dort entnommen werden.

Nach der Trocknung können die probiotisch wirkenden pulverförmigen Mikroorganismen verkapselt oder tablettiert werden, kommen aber auch in Pulverform zur Anwendung. Bei der Herstellung von Kapseln ist zu beachten, dass die verbleibende Wasseraktivität im Inneren der Kapsel für die Lagerstabilität mit ausschlaggebend ist.

Die meisten derzeit am Markt befindlichen Probiotika werden entweder als Joghurts oder mit Hilfe pharmazeutischer Standardtechniken in Form von Kapselfüllungen, Sachets, oder Tabletten produziert. Die Gewinnung der Kulturen erfolgt anaerob in Fermentern unter kontrollierten Bedingungen bei etwa 30 deg. C bis 40 deg. C oder 50 deg. C bis 57 deg. C und basiert auf der Vergärung von Nährlösungen und bestimmten Substraten.

Bei der Formulierung probiotischer Präparate ist die Stabilisierung, d.h. der Erhalt einer möglichst grossen Zahl lebensfähiger Bakterienzellen, die wichtigste Herausforderung. Ein getrocknetes probiotisches Produkt muss bei 5-10 deg. C gelagert werden. Die Packung sollte keinen Sauerstoff und kein Kohlendioxid enthalten, und die Wasseraktivität sollte einen Wert von 0,1-0,25 haben. Die heute angewandten Verfahren gehen von der Gefrier- oder Sprühtrocknung aus und setzen dem zu trocknenden Gut nieder- oder hochmolekulare Schutzhilfsmittel oder sogenannte Protektoren zu, die weder über eine schützende Raumstruktur noch über Eigenschaften verfügen, welche unter Sicherstellung der erwünschten Wasseraktivität die Lufttrocknung in einer Trockenkammer oder auf einem Trockenband ermöglichen.

Die typischerweise im Fermentationsprozess technologisch gewonnenen Mikroorganismen mit ernährungsphysiologischer oder probiotischer Wirksamkeit sind entweder Vertreter von Mikroorganismen, die den Darm der Wirbeltiere und des Menschen auf natürliche Weise besiedeln, so genannte Symbionten, oder werden jenen Mikrobenfamilien zugeordnet, die bei der Zubereitung von gesäuerten oder gereiften Nahrungsmitteln wie Brot, Sauermilchgetränken, Sauergemüse oder Käse und Wurst sowie alkoholischen Getränken verwendet werden. Die benannten Wirbeltiere betreffen besonders Nutztiere wie Rinder, Kälber, Schweine, Ferkel, Hühner, Zuchtfische, aber auch Zierfische und Haustiere wie Katzen, Hunde und Ziervögel.

Ernährungsphysiologisch und probiotisch wirksame Mikroorganismen sind im Wesentlichen Hefen, Milchsäure- und Bifidobakterien, die mit Nahrungsmitteln in den Verdauungstrakt von Wirbeltieren und des Menschen gelangen, sich dort ansiedeln und so günstige gesundheitliche Effekte erzielen können, wie dies ausführlich von Hammer H.F. und Aichbichler B. 2003 im Journal für Ernährungsmedizin, Band 5(2), Seiten 16-24, sowie von Unger F.M. und Viernstein H. 2004 im Journal für Ernährungsmedizin, Band 6(2) Seiten 24-29, beide in den Ausgaben für Österreich, beschrieben ist. Voraussetzung für die Wirkung insbesondere der Probiotika ist, dass sie lebend, in ausreichender Zahl und regelmässig in die jeweiligen Darmabschnitte gelangen.

Nach Expertenmeinung müssen 100 bis 1000 Millionen Bakterien pro Tag aufgenommen werden, um die Darmflora signifikant zu beeinflussen. Die Organismen können sich nur für wenige Tage bis Wochen im Darm behaupten.

Probiotisch wirksame Mikroorganismen sind seit langem bekannt, teilweise wissenschaftlich beschrieben und werden unterschiedlichen Familien zugeordnet. Die Hauptvertreter sind Bakterien, beispielsweise Arten der Familien Bacillus, Lactobacillaceae und milchsäurevergärende Kokken, Bifidobakterien, Propionibakterien, aber auch Hefen wie Saccharomyces boulardi oder Saccharomyces cerevisiae sowie Enterobacteriaceaen wie Escherichia coli.

Bestimmte Lactobacilli oder Enterokkoken sowie Colibakterien haben einen enormen Einfluss auf das Mukosaimmunsystem, ein wichtiger Teil des gesamten Immunsystems ist, das Antikörper ins Blut, in das Darmlumen, in die Tränenflüssigkeit sowie in verschiedene Sekrete anderer Schleimhäute abgibt. Steriltierversuche haben gezeigt, dass kein Leben ohne Bakterien in freier Natur möglich ist, denn die steril aufgezogenen Tiere sterben, sobald die geringste Infektion auftritt.

Um das Immunsystem zu modulieren werden schon seit Jahrzehnten probiotische Bakterien verabreicht, die bei vielen Erkrankungen wie Allergien, Magen-Darm-Erkrankungen, auch Hauterkrankungen usw. helfen können. Probiotische Bakterien produzieren auch antibiotische Substanzen, die sogenannten Bactericine, die schädliche Bakterien abwehren oder Hefen im Wachstum behindern. Diese Eigenschaft nennt man Kolonisationsresistenz. Der Mensch hat auf seiner Haut, den Schleimhäuten und im Darminhalt insgesamt etwa 100 Milliarden Bakterien, die ein Gewicht von insgesamt etwa 2 kg haben. Der Stoffwechsel körpereigener Bakterien ist nicht unwesentlich, da Bakterien essentielle Vitamine und niedere Kohlenstoffsäuren produzieren, die dem Energiestoffwechsel der Schleimhautzellen des Darmes dienen wie zum Beispiel die Propionsäure sowie die ernährungsphysiologisch besonders bedeutsame Milchsäure.

Aus der US 5,283,059 ist es bekannt, lebensfähige Mikroorganismen mit einer Kohlehydratkomponente aus Zerealien zu vermischen. Im Wesentlichen handelt es sich dabei um Stärke.

Die EP 1 344 458 A1 beschreibt ein probiotisches System, das vorzugsweise einem Nahrungsmittelprodukt zugeführt wird. Das probiotische System umfasst Pellets mit einem Volumen von ca. 0,02 cm², die mit Füllmittel und Mikroorganismen gefüllt sind. Die Hülle soll als Feuchtigkeitsbarriere wirken. Das Material hierfür ist Wachs oder Zellulose in den unterschiedlichsten Formen angegeben.

Die EP 1 213 347 A1 beschreibt ein Verfahren zum Konservieren von Zellen. Hierzu wird eine Matrix verwendet die in der Lage ist Wasser zu absorbieren, wobei durch die Behandlung ein Verkapseln der Zellen stattfindet. Als Material für die Matrix werden Fasern, modifizierte Zellulosenpectine oder verschiedene Formen von Stärken vorgeschlagen.

Aufgabe der Erfindung ist es eine Zusammensetzung bzw. ein Verfahren zur Verfügung zu stellen, mit dem ein geringst möglicher Vitalitätsverlust von Mikroorganismen durch die Trocknung entsteht.

Die Aufgabe der Erfindung wird jeweils eigenständig durch eine Zusammensetzung nach Anspruch 1 und ein Verfahren nach Anspruch 7 gelöst.

Die erfindungsgemäße Zusammensetzung zur Trockenkonservierung von zumindest probiotisch und/oder ernährungsphysiologisch wirksamen Mikroorganismen und Pflanzenbestandteilen enthält eine Pflanzenfraktion aus Gerstentrebern aus dem Brauprozess und/oder Destillationsgetreide aus dem Destillationsprozess, die die Funktion eines Trägermaterials für Mikroorganismen ausübt, gemahlen ist und eine komplexe, aus schalenförmigen, offenen, zwischen 0,003 mm und 2,9 mm im Durchmesser messenden Hohlräumen zusammengesetzte Wabenstruktur der mechanisch stabilen Samenschalen aufweist, und eine Hefen- und/oder Bakterienkultur in flüssiger oder breiiger Form in einem Verhältnis von 1 bis 10 Teile : 10 bis 1 Teil.

Das erfindungsgemäße Verfahren zur Herstellung einer Zusammensetzung, wie vorstehend beschrieben, umfaßt die Schritte: i) Vermehrung und Anreicherung einer Hefe- und/oder Bakterienkultur, ii) Zerkleinern, wie Mahlen bzw. Schroten, von Gerstentrebern aus dem Brauprozess und/oder Destillationsgetreide aus dem Destillationsprozess, die die Funktion eines Trägermaterials für Mikroorganismen ausüben, iii) Fraktionierung der zerkleinerten Gerstentreber und/oder Destillationsgetreide, iv) Vermischen der fraktionierten Gerstentreber und/oder Destillationsgetreide mit der Hefe- und/oder Bakterienkultur, v) Trocknung der Mischung.

Es wird eine Pflanzenfraktion aus Samenschalen als Hilfsstoff bzw. Additiv zur Trockenkonservierung von ernährungsphysiologisch oder probiotisch wirksamen oder beide Eigenschaften besitzenden flüssigen oder breiigen Mikrobenkulturen eingesetzt, mit dem auf aufwändige und teure Gefrier- beziehungsweise Sprühtrocknungsstufen verzichtet werden kann, und das ausschliesslich aus einem oder mehreren gesundheitlich völlig unbedenklichen Naturstoffen zusammengesetzt ist. Die Mikroorganismen bekommen zum Erhalt ihrer Vitalität während und nach der Trockenkonservierung durch diesen Hilfsstoff ausreichend mechanischen Schutz vor äusserer Krafteinwirkung und Schutz vor chemischen Einflüssen. Gleichzeitig wird durch den Hilfsstoff die rasche Verdunstung des Prozesswassers gewährleistet und trotzdem die für die Vitalität der Mikroorganismen während der Lagerung notwendige minimale Wasseraktivität sichergestellt. Die Zusammensetzung kann daher sowohl bei Raumtemperatur als auch gekühlt gelagert werden. Der Kosten sparende, die Vitalität der Mikrobenkulturen schonende Entzug des Restwassers wird durch diesen Hilfsstoff in technisch einfachen Trocknungsvorrichtungen ermöglicht.

Die durch entsprechende Mahl- und Trennungstechniken hergestellte quellfähige, für die menschliche und tierische Gesundheit völlig unbedenkliche, pulverförmige Pflanzenfraktionen weist eine komplexe, aus schalenförmigen, offenen, zwischen 0,003 mm und 2,9 mm, insbesondere 0,09 mm und 1 mm, vorzugsweise 0,03 mm und 0,315 mm im Durchmesser messenden Hohlräumen zusammengesetzte Wabenstruktur, wie jener der Aleuronschicht oder der mechanisch stabilen Samenschalen von Weizen, Gerste oder anderen Getreidearten auf. Die Teilchengrösse beträgt dabei zwischen 0,001 mm bis 3 mm, vorzugsweise 0,1 mm bis 0,315 mm. Sie dienen als Schutz- und Trocknungshilfsmittel zur schonenden und kostengünstigen, die Vitalität der Mikroorganismen besonders erhaltenden Trockenkonservierung. Besonders vorteilhaft erweist sich das Verhältnis von einem Teil der Pflanzenfraktion zu 1 bis 2,5 Teilen von in flüssiger oder breiiger Form angereicherten Mikroorganismenkulturen.

Bei der Produktion ernährungsphysiologisch wirksamer und probiotischer Produkte wird von bestimmten mikrobiellen Stammkulturen ausgegangen, wie z.B. von in Blumenwiesen oder Feldern, insbesondere auf deren Pflanzen, lebenden Mikroorganismen. Je nach Herkunft und spezifischen Anforderungen an die Substrate werden die Nährlösungen im Fermenter zusammengesetzt und mit Vorkulturen beimpft. Vorzugsweise werden Mikroorganismen verwendet, die Symbionten von Pflanzen und/oder Wirbeltieren, wie Nutztiere, und/oder Mensch sind und/oder in der Nahrungsmittelindustrie verwendbar sind. Dabei können die Mikroorganismen in Stäbchen- bzw. Kokkenform vorliegen. Eingangs sind bereits die aus dem Stand der Technik bekannten Mikroorganismen angeführt, die auch erfindungsgemäss verwendet werden können.

Die Mikroorganismen werden nach dem Erreichen einer hohen Zelldichte durch Zentrifugation oder Filtration vom flüssigen Kulturmedium getrennt, gewaschen und mit Pflanzenfraktionen als Hilfsstoff formuliert, welche die Zellen beim Trocknungsprozess stabilisieren sowie deren Lagerfähigkeit verbessern. Als Protektoren sind aus dem Stand der Technik osmotisch wirksame Substanzen, beispielsweise Aminosäuren, wie Glutamat, Disaccharide, wie Saccharose oder Trehalose, höhere Zuckeralkohole, wie Sorbit, Ribit oder Mannit oder homopolymere Kohlenhydrate wie Polysaccharide, Salze der Alginsäure wie Natriumalginat oder die halbsynthetische Carboxymethylcellulose bekannt, die im Hinblick auf die erwünschte Restwasserkapazität einen Ausgleich schaffen, aber über keine mikroskopische Struktur verfügen, die eine Umschliessung der Mikroorganismen in Form von Hohlräumen erlauben.

Die Pflanzenfraktionen üben sowohl die Funktion eines Trägermaterials für die Mikroorganismenzellen, als auch die Aufgaben von Schutzstoffen vor mechanischer und chemischer Einwirkung wie Austrocknung oder Oxidation mit Luftsauerstoff aus, und sie sind weiters vorzüglich geeignet, eine rasche Verdunstung des Prozesswassers zu erlauben. Sie sind Faserstoffe, die über eine komplexe molekulare Tertiärstruktur mit offenen Hohlräumen vertugen, wie sie in Schalen von bestimmten Getreidesorten, so genannten Zerealien, vorkommen und welche für getrocknete Mikroorganismen schützende Kompartimente bilden. In ihrer chemischen Zusammensetzung enthalten diese aus Zellwänden entstandenen Pflanzenfraktionen hauptsächlich faserartige Kohlenhydratpolymere, wie Cellulosen und Hemicellulosen, und sind daher als heteropolymer zu bezeichnen. Getreidekörner verfügen neben dem Mehlkörper, dem sogenannten Endosperm, über einen Keimling und eine Schale, die aus Hemicellulosen, auch Pflanzenfaser- oder Wabenstoffe genannt, in Schichten komplex aufgebaut und Nebenprodukte der humanen Ernährung oder Industrieproduktion sind. Als Aleuronschicht wird dabei das Silberhäutchen des Getreidekorns bezeichnet, das den Mehlkern des Getreidekorns und den Kern umschliesst.

Die Gewinnung der Pflanzenfraktionen erfolgt aus Ausgangsstoffen, in denen diese Fraktionen bereits angereichert sind, nämlich Gerstentrebern aus dem Brauprozess oder als Destillatgetreide, Destillatmais oder Destillatweizen, bezeichneten Nebenprodukte aus der industriellen Alkoholproduktion.

Die Pflanzenfraktionen mit Teilchengrössen zwischen 0,001 mm bis 3 mm, insbesondere 0,001 mm bis 1mm, vorzugsweise, 0,001 mm bis 0,315 mm können aus nur einem einzigen Ausgangsstoff oder aber aus Mischungen von verschiedenen Ausgangsstoffen gewonnen werden. Es können auch verschiedene Pflanzenfraktionen in Mischungen zur Trockenkonservierung eingesetzt werden, sofern die Teilchengrössen aller eingesetzten Fraktionen im genannten Bereich liegen, da dadurch keine ungünstigen Auswirkungen auf die erfindungsgemässen Vorteile und Effekte zu erwarten sind.

Für die praktische Verwendung der Pflanzenfraktionen als Additiv zur Trockenkonservierung ist jedoch nicht nur die Fraktion mit den bestimmten Raumstrukturen entscheidend, sondern auch jene mit besonderer Wasserbindungsaktivität, wie sie in den Pflanzenanteilen vorliegen. Die aus Pentosanen und Hexosanen aufgebauten Hemicellulosen können durch Quellung ein Mehrfaches der Eigenmasse an Wasser aufnehmen und weisen dabei durchlässige Oberflächenstrukturen auf, die einerseits die Verdunstung des Prozesswassers begünstigen, aber auch den für die Vitalität der zu konservierenden Mikroorganismen notwendigen Restwassergehalt sicherstellen. Dieser entspricht in etwa 1 % bis 20 %, vorzugsweise 7 bis 15%. Höhere Verfügbarkeit von Wasser ermöglicht potentiell schädliche enzymkatalysierte Prozesse, während niedrigere Werte zu irreversiblen Schädigungen der Zellen führen können.

Um den mechanischen Schutz, die rasche Verdunstung des Prozesswassers und den notwendigen Restwassergehalt sicherzustellen, kommt der Teilchengrössenverteilung der aufbereiteten Pflanzenfraktion grosse Bedeutung zu. Die Fraktion von 0,001 mm bis 0,315 mm lässt sich unterteilen in eine Unterfraktion von 0,001 mm bis 0,1 mm und in eine zweite Unterfraktion von 0,1 mm bis 0,315 mm. Während die zweite Unterfraktion vorwiegend die schalenförmigen Hohlraumstrukturen zur Aufnahme der Mikroorganismen bereitstellt, besitzt die erste Unterfraktion genügend Feinanteile, die sich während des Trocknungsprozesses als dünne Decke über die Öffnungen der mit Mikroorganismen gefüllten Hohlräume legt und damit die Mikroorganismen von dieser Seite her vor mechanischer Belastung und Austrocknung unter die erforderliche Mindestwasseraktivität schützt.

In manchen Fällen ist es von Vorteil, nur die Unterfraktion von 0,001 mm bis 0,1 mm zur Trockenkonservierung einzusetzen, etwa wenn dies die Anforderung an das fertige Trockenpräparat vorgibt oder andere technologische oder wirtschaftliche Gründe vorliegen. In anderen Fällen kann aus analogen Gründen auch nur die Unterfraktion von 0,1 mm bis 0,315 mm verwendet werden. In allen diesen Fällen sind die erfindungsgemässen Vorteile des Schutzes vor Vitalitätsverlust bei der Trocknung gegeben.

Ein weiterer technologischer Vorteil besteht darin, dass die durch die beschriebene Pflanzenfraktion als Additiv zur Trockenkonservierung rasche und kontrollierte Verdunstung des Prozesswassers auf teure und aufwändige Gefrier- oder Sprühtrocknung verzichtet werden kann und eine Kammer- oder Bandtrocknung angewendet werden kann, ohne dass die Vitalität der empfindlichen probiotischen und ernährungsphysiologisch wirksamen Mikroorganismen darunter leidet. Auch die Stabilität der Trockenpräparate wird dadurch erhöht.

Für die Herstellung der Fraktionen aus Gerstentrebern oder Destillatgetreide ist am besten ein mehrstufiger Mahl- und Trennungsgang anzuwenden, mit welchem jene Fraktionen von Teilchengrössen erzeugt werden, welche die wichtigsten Aufgaben des Additivs, nämlich den physikalischen Schutz und einen gezielten Entzug des Wassers aus der dickflüssigen oder breiigen Masse beim Trocknen, einen raschen Trocknungsvorgang und eine Wasseraktivität von 0,1 bis 0,25 beziehungsweise einen Restwassergehalt zwischen 1 % bis 20 %, vorzugsweise 5 % bis 15 %, sicherstellen.

Vorzugsweise werden zur Mahlung Prallmühlen, Scheiben- oder Urgesteinsmühlen eingesetzt, um die Randschichten umfassend Cellulosen, Hemicellulosen, Aleuron, Samenschale und Fruchtschale voneinander zu trennen, Hohlraumstrukturen in einer Grössenfraktion von 0,03 mm bis 0,315 mm freizulegen, die Oberflächen zu vergrössern und die hemicellulären quellfähigen Stoffanteile in feinere Partikel in der Grössenfraktion zwischen 1 m und 100 m zu verteilen.

Eine Scheibenmühle besteht aus einem feststehenden Bodenstein und dem sich darüber drehenden Läufer. Wird das Korn fein zerrieben, spricht man vom Mahlen. Wird das Korn grob zerrieben, genauer gesagt zwischen den Mahlsteinen nur gebrochen, spricht man vom Schroten. Schroten ist also grobes Mahlen. Der Übergang vom feinen Mehl bis zum groben Schrot ist fliessend. Mahlsteine besitzen eine grosse Härte und gute Porosität, die sich vorteilhaft auf den Mahlvorgang auswirken. Es lässt sich der Abstand zwischen den Steinen regulieren. Die Mahlfläche ist vom Steinauge - das ist die Bohrung in der Mitte - bis zur Mahlbahn hin abgeschrägt. Diese Vertiefung hat den Zweck, einen sicheren Einzug des Mahlgutes zu gewährleisten und durch Vorzerkleinerung die Mahlarbeit zu unterstützen. Das Mahlgut tritt nach seiner Zerkleinerung als Pulver durch Scherkraft aus dem Spalt aus.

Die Erfindung wird im Folgenden anhand von zwei schematischen Zeichnungen und vier Beispielen sowie fünf dazu gehörenden Figuren näher erläutert:

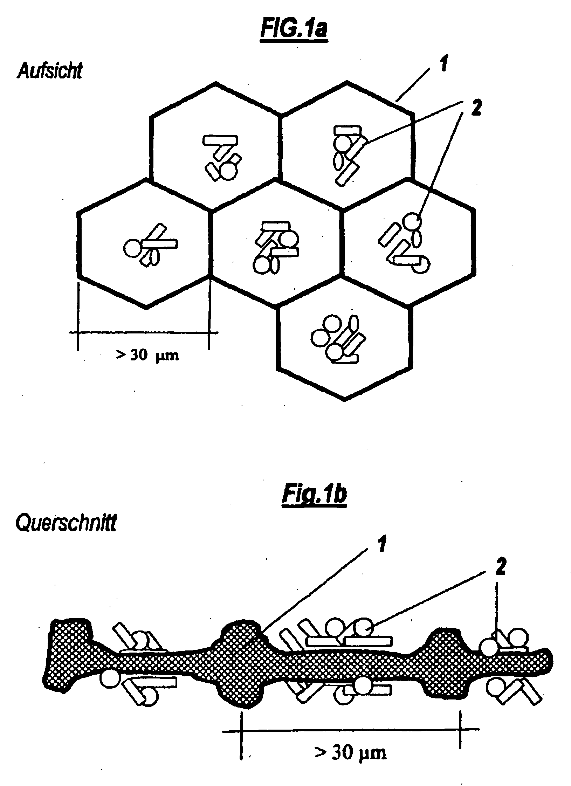

Fig. 1a und 1b : zeigen schematisch in Aufsicht und Querschnitt die Wabenstruktur von Gerstenschalen mit eingelagerten Mikroben nach rasterelektronen-mikroskopischer Aufnahme, wobei die aus den Fraktionen bestehenden schalenförmigen Waben 1 und die bei der Trockenkonservierung in darin eingelagerten Mikroorganismen 2, die in diesem Fall aus einer Mischung von Stäbchen, Kokken und Hefen bestehen.
Fig. 2 : zeigt die Überlebensraten von Trockenpräparaten aus Kulturen des probiotischen Bakteriums Lactobacillus rhamnosus DSMZ 20021 mit drei verschiedenen Trägermaterialien in Abhängigkeit von der Lagerungszeit.
Fig. 3 : zeigt die Korngrössenverteilung der im Beispiel 2 verwendeten Weizenkleie, wobei die Unterfraktion 3 Teilchen zwischen 0,001 mm bis 0,1 mm enthält, die Unterfraktion 4 Teilchen zwischen 0,1 mm bis 0,315 mm enthält.
Fig. 4 : zeigt den Wasserentzug der in den Beispielen 2 und 3 verwendeten Gerstenfraktionen und Weizenfraktionen grob und fein.
Fig. 5 : zeigt die Korngrössenverteilung der im Beispiel 3 verwendeten Gerste, wobei die Unterfraktion 3 Teilchen zwischen 0,001 mm bis 0,1 mm enthält, die Unterfraktion 4 Teilchen zwischen 0,1 mm bis 0,315 mm enthält.
Fig. 6 : zeigt die Korngrössenverteilung der im Beispiel 4 verwendeten Maisfraktion, wobei die Unterfraktion 3 Teilchen zwischen 0,001 mm bis 0,1 mm enthält, die Unterfraktion 4 Teilchen zwischen 0,1 mm bis 0,315 mm enthält.
Fig. 7 : zeigt den Wasserentzug der im Beispiel 4 verwendeten Maisfraktion grob und fein.

### Beispiel 1:

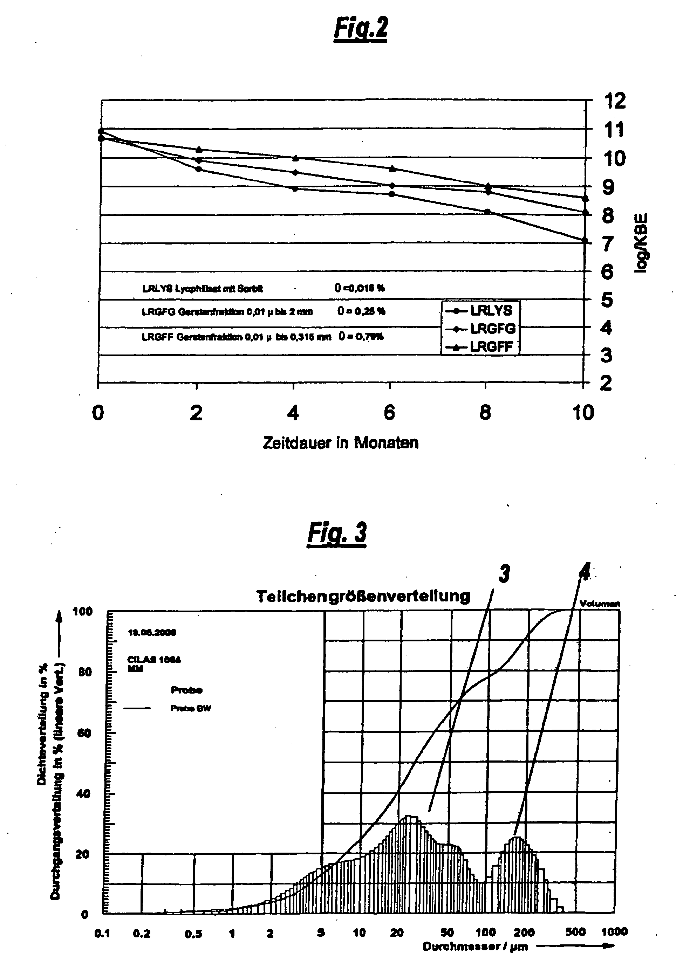

Ein Zentrifugal einer Kultur des probiotischen Stammes Lactobacillus rhamnosus DSMZ 20021 wurde in einer Suspension von Magermilch (10 Gew. %) mit 1,25 % Sorbitol als Trägermaterial aufgenommen und lyophilisiert. Die Zellzahlen wurden zu Beginn und während des Lagerungsversuches auf MRS-Agar bestimmt. Im Vergleich dazu wurde das Zentrifugat mit einer gemahlenen Fraktion aus Gerstenschalen mit Anteilen von 0,01 mm bis 2 mm sowie mit zweifach gemahlenen und auf eine Korngrösse von < 0,315 mm gesiebten Fraktion aus Gerstenschalen im Gewichtsverhältnis von 1:1,5 vermischt und während 4 h getrocknet. Jeder Probenansatz wurde luftdicht in 10 verschlossenem Glasröhrchen zu je 3 g luftdicht verpackt, in der Dunkelheit bei Zimmertemperatur gelagert und zu den in Fig.2 angegeben Zeitpunkten gleiche Gewichtsteile zu 1 Gramm entnommen und darin in 3-facher Wiederholung die Zelltiter bestimmt. Die Überlebensraten in Abhängigkeit von der Lagerungszeit Ü sind in Fig. 2 dargestellt. Jenes Trockenpräparat mit der erfindungsgemässen Gerstenfraktion und Teilchengrössen <0,315 mm zeigt mit Ü=0,79 die höchste Überlebensrate der probiotischen Mikroorganismen.

### Beispiel 2:

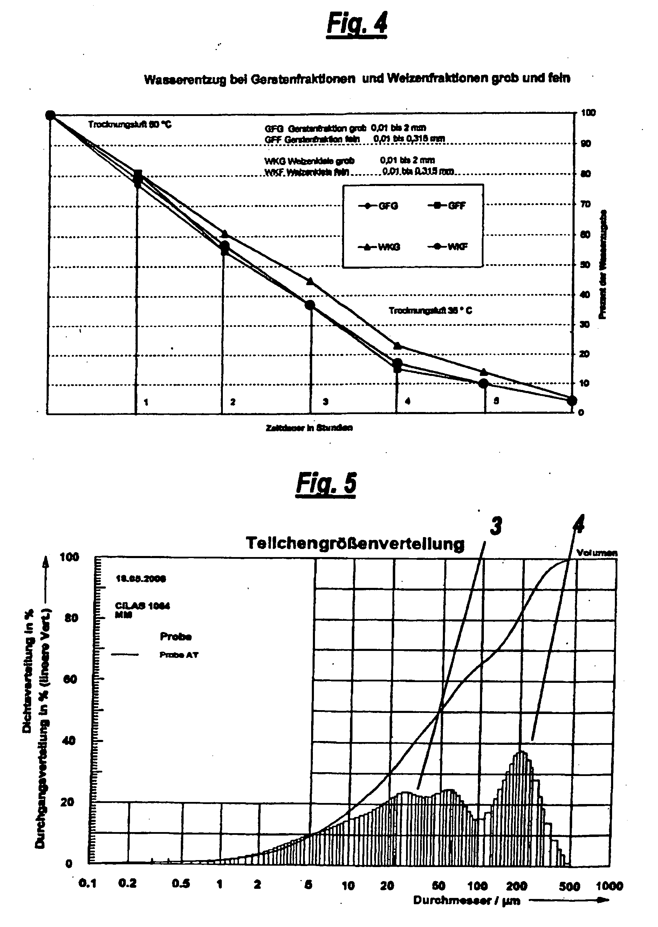

Für den menschlichen Verzehr geeignete Weizenkleie mit Partikelgrössen von 0,01 mm bis 3 mm und einem Anteil von 55 % an einer Fraktion mit Partikelgrössen unter 0,315 mm wie in Fig. 3 dargestellt, wird mit einem Gewichtsteil zu zwei Gewichtsteilen einer hoch angereicherten flüssigen Mikrobenkultur vermischt und das erdfeuchte, krümelige und schüttfähige Material bei 50 deg. C Kammertemperatur in der Trockenkammer luftgetrocknet. Während des Trocknungsvorganges wird das Material gerührt und fein verteilt. Bei einer Restfeuchte von < 30% wird die Trocknungstemperatur auf 35 deg. C herabgesetzt und bis auf einen Restwassergehalt von 10%, wie in Fig. 4 dargestellt, getrocknet. Nach der Abkühlung wird das fertige Konzentrat auf den Gehalt an koloniebildenden Einheiten untersucht und unter Reinraumbedingungen luftdicht verpackt und dunkel gelagert. Es zeigt sich, dass die Weizenkleiefraktion WKF eine rasche und zuverlässige Trocknung der Mikrobenkultur erlaubt.

### Beispiel 3:

Der beim Abläuterungsprozess auf 78 deg. C erhitzte und damit pasteurisierte und getrocknete nicht abgebaute Anteil der Gerste aus dem Brauprozess mit Partikelgrössen von 0,1 mm bis 5 mm wird in einer Scheibenmühle vermahlen und eine Fraktion mit 0,315 mm ausgesiebt.

Der nicht abgesiebte Anteil wird nochmals vermahlen und wie vorher gesiebt und beide Feinfraktionen vereinigt, wie in Fig. 5 dargestellt. Ein Gewichtsteil der Feinkleie wird mit zwei Gewichtsteilen einer angereicherten flüssigen Mikrobenkultur vermischt und das erdfeuchte krümelige Material bei 50 deg. C Kammertemperatur luftgetrocknet. Während des Trocknungsvorganges wird das Material gerührt und fein verteilt und in einen homogenen Zustand übergeführt. Bei einer Restfeuchte von < 30 % wird die Trocknungstemperatur auf 35 deg. C herabgesetzt und bis auf einen Restwassergehalt von 10 %, wie in Fig. 4 dargestellt, getrocknet. Nach der Abkühlung wird das fertige Konzentrat auf den Gehalt an koloniebildenden Einheiten untersucht und unter Reinraumbedingungen luftdicht verpackt und dunkel gelagert. Es zeigte sich, dass die Gerstenfraktion GFF eine rasche und zuverlässige Trocknung der Mikrobenkultur erlaubt.

### Beispiel 4:

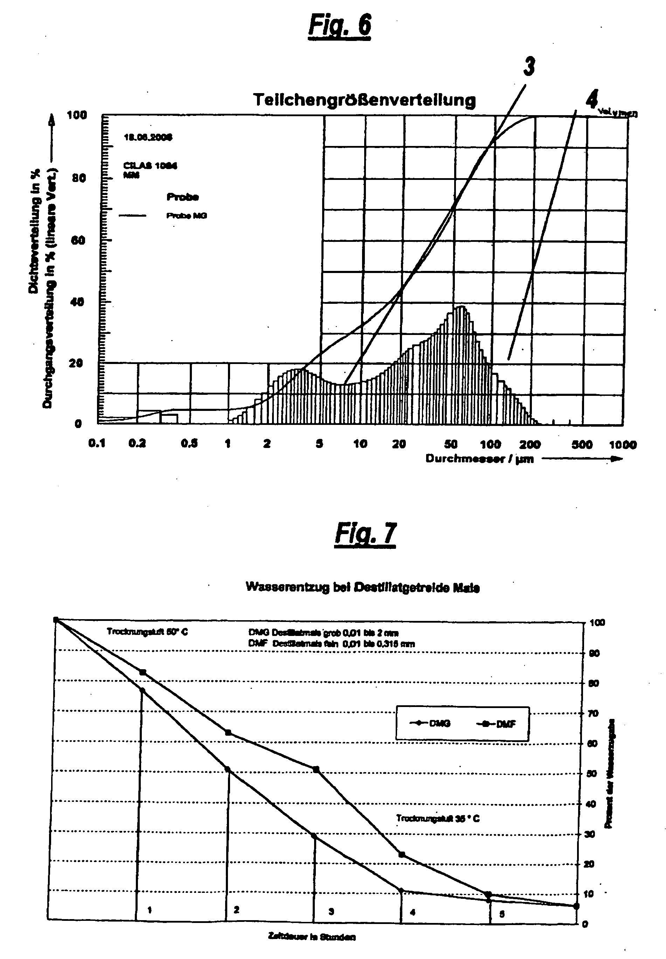

Der beim Destillationsprozess auf 85 deg. C erhitzte und damit entkeimte unfermentierte Anteil des Maisschrotes mit Partikelgrössen von 0,1 mm bis 3 mm wird in einer Scheibenmühle vermahlen und eine Fraktion mit 0,315 mm ausgesiebt. Der nicht abgesiebte Anteil wird nochmals vermahlen und wie vorher gesiebt und beide Feinfraktionen vereinigt. Die Teilchengrössenverteilung ist in Fig. 6 dargestellt. Ein Gewichtsanteil des feinen Destillatgetreidepulvers wird mit eineinhalb Gewichtsteilen einer hoch angereicherten flüssigen Mikrobenkultur vermischt und das schüttfähige krümelige Material bei 50 deg. C Kammertemperatur luftgetrocknet. Während des Trocknungsvorganges wird das Material gerührt und fein verteilt und in einen homogenen Zustand übergeführt. Bei einer Restfeuchte von < 30 % wird die Trocknungstemperatur auf 35 deg. C herabgesetzt und bis auf einen Restwassergehalt von 10 %, wie in Fig. 7 dargestellt, getrocknet. Nach der Abkühlung wird das fertige nunmehr rieselfähige Mikrobenkonzentrat auf den Gehalt an koloniebildenden Einheiten untersucht und unter Reinraumbedingungen luftdicht verpackt und dunkel gelagert. Es zeigte sich, dass die Destillatmaisfraktion DMF eine rasche und zuverlässige Trocknung der Mikrobenkultur erlaubt.

## Patentansprüche

1. Zusammensetzung zur Trockenkonservierung von zumindest probiotisch und/oder ernährungsphysiologisch wirksamen Mikroorganismen und Pflanzenbestandteilen, wobei die Zusammensetzung enthält:
eine Pflanzenfraktion aus Gerstentrebern aus dem Brauprozess und/oder Destillationsgetreide aus dem Destillationsprozess, die die Funktion eines Trägermaterials für Mikroorganismen ausübt, gemahlen ist und eine komplexe, aus schalenförmigen, offenen, zwischen 0,003 mm und 2,9 mm im Durchmesser messenden Hohlräumen zusammengesetzte Wabenstruktur der mechanisch stabilen Samenschalen aufweist, und
eine Hefen- und/oder Bakterienkultur in flüssiger oder breiiger Form in einem Verhältnis von 1 bis 10 Teile : 10 bis 1 Teil.

2. Zusammensetzung nach Anspruch 1, **dadurch gekennzeichnet, dass** die Hefen- und/oder Bakterienkultur angereichert ist.

3. Zusammensetzung nach Anspruch 1, **dadurch gekennzeichnet, dass** die Partikelgröße der Pflanzenfraktion aus einem Bereich mit einer unteren Grenze von 0,001 mm und einer oberen Grenze von 3 mm ausgewählt ist.

4. Zusammensetzung nach einem der Ansprüche 1 bis 3, **dadurch gekennzeichnet, dass** der Anteil der Partikelfraktion mit einer Größe von weniger als 0,315 mm 55 % beträgt.

5. Zusammensetzung nach einem der Ansprüche 1 bis 4, **dadurch gekennzeichnet, dass** Unterfraktionen der Gerstentreber und/oder Destillationsgetreide vorliegen, wobei die Teilchengröße einer ersten Unterfraktion aus einem Bereich mit einer unteren Grenze von 0,001 mm und einer oberen Grenze von 0,1 mm und die Teilchengröße einer zweiten Unterfraktion aus einem Bereich mit einer unteren Grenze von 0,1 mm und einer oberen Grenze von 0,315 mm ausgewählt ist.

6. Zusammensetzung nach einem der Ansprüche 1 bis 5, **dadurch gekennzeichnet, dass** der Restwassergehalt aus einem Bereich mit einer unteren Grenze von 1 % und einer oberen Grenze von 20 % ausgewählt ist.

7. Verfahren zur Herstellung einer Zusammensetzung nach einem der Ansprüche 1 bis 6 umfassend die Schritte: i) Vermehrung und Anreicherung einer Hefe- und/oder Bakterienkultur, ii) Zerkleinern, wie Mahlen bzw. Schroten, von Gerstentrebern aus dem Brauprozess und/oder Destillationsgetreide aus dem Destillationsprozess, die die Funktion eines Trägermaterials für Mikroorganismen ausüben, iii) Fraktionierung der zerkleinerten Gerstentreber und/oder Destillationsgetreide, iv) Vermischen der fraktionierten Gerstentreber und/oder Destillationsgetreide mit der Hefe- und/oder Bakterienkultur, v) Trocknung der Mischung.

8. Verfahren nach Anspruch 7, **dadurch gekennzeichnet, dass** die Trocknung bei einer Temperatur mit einer unteren Grenze von 30°C und einer oberen Grenze von 50°C durchgeführt wird.

9. Verfahren nach einem der Ansprüche 7 oder 8, **dadurch gekennzeichnet, dass** die Trocknung mehrstufig bei unterschiedlichen Temperaturen erfolgt, wobei mit einer höheren Temperatur begonnen wird.

10. Verfahren nach einem der Ansprüche 8 bis 9, **dadurch gekennzeichnet, dass** die Trocknungstemperatur bei einer Restfeuchte von weniger als 30% auf 35°C reduziert wird.

11. Verwendung der Zusammensetzung nach einem der Ansprüche 1 bis 6 als Nahrungs- bzw. Futtermittel und/oder Nahrungsergänzung, Nahrungsergänzungsmittel bzw. novel food.

## Claims

1. Composition for the dry conservation of microorganisms and plant components that are active at least in a probiotic and/or nutritionally physiological manner, wherein the composition contains:
a plant fraction composed of spent grain from the brewing process and/or distillation grain from the distillation process, which performs the function of a carrier material for microorganisms, is milled and has a complex open honeycomb structure of the mechanically stable seed husks made up of cup-shaped cavities measuring between 0.003 mm and 2.9 mm in diameter, and
a yeast and/or bacterial culture in liquid or slurry form in a ratio of 1 to 10 parts : 10 to 1 part.

2. Composition according to claim 1, **characterised in that** the yeast and/or bacterial culture is concentrated.

3. Composition according to claim 1, **characterised in that** the particle size of the plant fraction is selected from a range with a lower limit of 0.001 mm and an upper limit of 3 mm.

4. Composition according to one of claims 1 to 3, **characterised in that** the proportion of the particle faction with a size of less than 0.315 mm amounts to 55%.

5. Composition according to one of claims 1 to 4, **characterised in that** sub-fractions of the spent grain and/or distillation grain are present, wherein the particle size of a first sub-fraction is selected from a range with a lower limit of 0.001 mm and an upper limit of 0.1 mm and the particle size of a second sub-fraction is selected from a range with a lower limit of 0.1 mm and an upper limit of 0.315 mm.

6. Composition according to one of claims 1 to 5, **characterised in that** the residual water content is selected from a range with a lower limit of 1% and an upper limit of 20%.

7. Method for the production of a composition according to one of claims 1 to 6 comprising the steps: i) propagating and concentrating a yeast and/or bacterial culture, ii) crushing, such as milling or rough grinding, spent grain from the brewing process and/or distillation grain from the distillation process, which perform the function of a carrier material for microorganisms, iii) fractionating the crushed spent grain and/or distillation grain, iv) mixing the fractionated spent grain and/or distillation grain with the yeast and/or bacterial culture, v) drying the mixture.

8. Method according to claim 7, **characterised in that** the drying is conducted at a temperature with a lower limit of 30°C and an upper limit of 50°C.

9. Method according to one of claims 7 or 8, **characterised in that** the drying occurs in multiple stages at different temperatures, wherein it commences with a higher temperature.

10. Method according to one of claims 8 to 9, **characterised in that** the drying temperature is reduced to 35°C with a residual humidity of less than 30%.

11. Use of the composition according to one of claims 1 to 6 as food or animal feed material and/or nutritional supplementation, nutritional supplement or novel food.

## Revendications

1. Composition pour la conservation à sec de microorganismes et de constituants végétaux actifs au moins en tant que probiotiques et/ou sur la physiologie de la nutrition, laquelle composition contient :
- une fraction végétale à base de drèches de brasserie et/ou de résidus de distillation de céréales, qui joue le rôle de matériau support pour les microorganismes, qui est moulue et qui présente une structure en nid d'abeilles complexe, composée de cavités ouvertes en forme de cuvettes et mesurant de 0,003 à 2,9 mm de diamètre, et formée par les enveloppes mécaniquement stables des grains,
- et une culture de levures et/ou de bactéries, sous forme de liquide, de bouillie ou de pâte,
en une proportion de 1 à 10 parties pour 10 à 1 parties.

2. Composition conforme à la revendication 1, **caractérisée en ce que** la culture de levures et/ou de bactéries est concentrée.

3. Composition conforme à la revendication 1, **caractérisée en ce que** la taille des particules de la fraction végétale est choisie dans l'intervalle qui a pour limite inférieure 0,001 mm et pour limite supérieure 3 mm.

4. Composition conforme à l'une des revendications 1 à 3, **caractérisée en ce que** la fraction des particules de taille inférieure à 0,315 mm représente une part de 55 %.

5. Composition conforme à l'une des revendications 1 à 4, **caractérisée en ce qu'**elle comporte des sous-fractions des drèches de brasserie et/ou résidus de distillation de céréales, dans lesquelles la taille des particules d'une première sous-fraction est choisie dans l'intervalle qui a pour limite inférieure 0,001 mm et pour limite supérieure 0,1 mm, et la taille des particules d'une deuxième sous-fraction est choisie dans l'intervalle qui a pour limite inférieure 0,1 mm et pour limite supérieure 0,315 mm.

6. Composition conforme à l'une des revendications 1 à 5, **caractérisée en ce que** la teneur en eau résiduelle est choisie dans l'intervalle qui a pour limite inférieure 1 % et pour limite supérieure 20 %.

7. Procédé de préparation d'une composition conforme à l'une des revendications 1 à 6, comportant les étapes suivantes :
i) prolifération et concentration d'une culture de levures et/ou de bactéries ;
ii) fragmentation, par exemple broyage ou concassage, des drèches de brasserie et/ou des résidus de distillation de céréales qui jouent le rôle de matériau support pour les microorganismes ;
iii) fractionnement des fragments de drèches de brasserie et/ou de résidus de distillation de céréales ;
iv) mélange de la ou des fraction(s) convenable(s) de drèches de brasserie et/ou de résidus de distillation de céréales avec la culture de levures et/ou de bactéries ;
v) et séchage du mélange.

8. Procédé conforme à la revendication 7, **caractérisé en ce que** le séchage est opéré à une température située dans l'intervalle qui a pour limite inférieure 30 °C et pour limite supérieure 50 °C.

9. Procédé conforme à l'une des revendications 7 et 8, **caractérisé en ce que** l'on opère le séchage en plusieurs étapes effectuées à différentes températures, en commençant à une température relativement élevée.

10. Procédé conforme à l'une des revendications 8 et 9, **caractérisé en ce que** la température de séchage est abaissée à 35 °C lorsque la teneur en humidité résiduelle est inférieure à 30 %.

11. Utilisation d'une composition conforme à l'une des revendications 1 à 6 en tant que produit alimentaire ou nourriture pour animaux et/ou complément alimentaire, additif alimentaire ou aliment nouveau.
